Europäisches Patentamt

European Patent Office

Office européen des brevets

(11) Veröffentlichungsnummer : **0 157 857**
**B1**

(12) **EUROPÄISCHE PATENTSCHRIFT**

(45) Veröffentlichungstag der Patentschrift :
13.04.88

(51) Int. Cl.⁴ : **A 01 C   1/08**, B 05 B   1/26

(21) Anmeldenummer : 84903709.8

(22) Anmeldetag : 05.10.84

(86) Internationale Anmeldenummer :
PCT/AT 84/00033

(87) Internationale Veröffentlichungsnummer :
WO/8501636 (25.04.85 Gazette 85/10)

(54) VORRICHTUNG ZUR GLEICHMÄSSIGEN DOSIERUNG, VERTEILUNG UND AUFBRINGUNG VON FLÜSSIG FORMU-LIERTEN SCHUTZSTOFFEN, INSBESONDERE BEIZMITTELN.

(30) Priorität : 07.10.83 AT 3566/83

(43) Veröffentlichungstag der Anmeldung :
16.10.85 Patentblatt 85/42

(45) Bekanntmachung des Hinweises auf die Patenter-teilung : 13.04.88 Patentblatt 88/15

(84) Benannte Vertragsstaaten :
CH DE FR LI SE

(56) Entgegenhaltungen :
FR-A- 1 009 980
FR-A- 1 337 299
US-A- 3 084 874
US-A- 3 138 482

(73) Patentinhaber : MASCHINENFABRIK HEID AKTIEN-GESELLSCHAFT
Mahlerstrasse 6
A-1015 Wien (AT)

(72) Erfinder : MESSNER, Erich
Liechtensteinstrasse 61/22
A-1090 Wien (AT)
Erfinder : HAROLD, Franz
Hauptstrasse 37
A-3413 Hintersdorf (AT)

(74) Vertreter : Müllner, Erwin, Dr. et al
Patentanwälte Dr. Erwin Müllner Dipl.-Ing. Werner
Katschinka Postfach 159 Weihburggasse 9
A-1014 Wien (AT)

**Beschreibung**

Die Erfindung betrifft eine Vorrichtung zur gleichmäßigen Dosierung, Verteilung und Aufbringung von flüssig formulierten Schutzstoffen, insbesondere Beizmitteln, auf Samen, mit einer Mischtrommel mit Sameneinlauf und Zuleitung für die Schutzstoffe.

Es ist bekannt, pulverförmige Schutzstoffe auf Samenkörner aufzubringen, wobei die Körner mit den Schutzstoffen in einer Mischtrommel miteinander vermengt werden. Diese bekannte Aufbringungsart (Beizung) mit pulverförmigen Stoffen hat den Nachteil, daß durch den Abrieb bis zu 50 % der Schutzstoffe verloren gehen, bevor der Samen in den Boden gelangt. Man muß daher überdosieren, um die notwendigen Mengen zum Schutz des Samens in den Boden zu bringen. Die Überdosierung belastet einerseits die Gesundheit der mit der Beizung beschäftigten Menschen und anderseits natürlich auch die Umwelt.

Durch die Formulierung von wässerigen Beizmitteln wurde zu einem geringen Maß eine Verbesserung hinsichtlich der Belastung der mit der Beizung beschäftigten Menschen erreicht, da aber aus Funktions-Sicherheitsgründen die Aufwandmengen nicht reduziert werden, bleibt die übermäßige Belastung der Umwelt bestehen.

Solange Quecksilberpräparate als Beizmittel für Saatgut verwendet wurden, war eine genaue Verteilung der Schutzstoffe über die Samenoberfläche nicht notwendig, da diese Präparate eine Dampfphase bildeten, die das zu beizende Saatgut durchdrang und dabei seine Wirkung entfaltete.

Durch die Verdrängung der Quecksilberpräparate durch andere Mittel, die keine Gasphase bilden, wurde es erforderlich, die Beizmittel gleichmäßig über die Samenkörneroberfläche rundum verteilt aufzubringen.

Das Aufbringen der Beizmittel in über die Samenkörneroberfläche rundum gleichmäßig verteilter Weise ist auch die Voraussetzung dafür, daß die Aufwandmengen so klein wie möglich gehalten werden können.

Der Versuch, flüssige Formulierungen von Beizmitteln mit bekannten Sprüheinrichtungen auf das Saatgut aufzubringen, scheitert an der Konsistenz solcher Beizmittel. Flüssige Formulierungen von Beizmittel für Saatgut bestehen nämlich im Wesen aus einem klebrigen Trägerstoff in dem die für die Beizung wirksame Substanz verteilt ist. Übliche Sprüheinrichtungen werden durch den für die Haftung des Beizmittels auf der Samenkörneroberfläche notwendigen Trägerstoff leicht verstopft und somit funktionsuntüchtig. Sie sind daher zur Aufbringung flüssiger Beizmittel untauglich.

Ziel der Erfindung ist die Bereitstellung einer betriebssicheren Vorrichtung, mit der alle flüssig formulierten Beizmittel in einen Sprühnebel übergeführt werden können, um bei geringsten Aufwandmengen eine optimale Rundumverteilung zu erreichen.

Dieses Ziel wird mit einer Vorrichtung der eingangs genannten Art erreicht, bei der erfindungsgemäß die von einer Dosierpumpe kommende und in eine Mischtrommel mündende, als Zuleitung für die Schutzstoffe dienende Flüssigkeitsrohrleitung mit einem Ausgleichsgefäß oder -rohr zur Sekundärluftansaugung in Verbindung steht, und ein in die Mischtrommel mündende Druckluftleitung vorgesehen ist, in deren Ausgang konzentrisch der Ausgang der Flüssigkeitsrohrleitung liegt und gegenüber dem Ausgang der Flüssigkeitsrohrleitung eine Prallplatte angeordnet ist. Durch das Ausgleichsgefäß bzw. -rohr wird durch den Unterdruck am Flüssigkeitsrohrende kontinuierlich Sekundärluft angesaugt und mit dem Beizmittel vermischt ; nach Abschalten der Dosierpumpe bewirkt die Sekundärluft, daß die Flüssigkeitsrohrleitung ohne Nachtropfen leergesaugt wird. Durch die Sekundärluft erfolgt eine 100 %ige Entleerung des Flüssigkeitsrohres ohne Tropfenbildung, wodurch die Reinhaltung vereinfacht wird und die exakte Dosierung gewährleistet ist.

Mit der erfindungsgemäßen Vorrichtung ist es möglich, jede gewünschte Aufwandmenge an Beizmittelflüssigkeiten mit verschiedenen Viskositätswerten optimal in einem geschlossenen System aufbringen zu können, wobei die Erfüllung aller Anforderungen hinsichtlich der Betriebssicherheit, der Reinhaltung und der Hygienevorschriften gewährleistet ist.

Die Dosierung erfolgt durch gewichtsmäßige Erfassung des in die Mischtrommel einlaufenden Gutes und zwangsläufige Impulsbefehle an die Dosierpumpe.

Die Dosierpumpe saugt aus einem mit einem Rührwerk versehenen Behälter die vorgegebenen Mengen an Beizmittelflüssigkeit und drückt sie in das erfindungsgemäße Rohrdüsensystem. Mittels Preßluft — die durch einen Druckregelmanometer geregelt wird — wird am Rohrende ein Unterdruck erzeugt, wodurch die Flüssigkeitsleitung unter permanentem Unterdruck steht. Durch den erzeugten Unterdruck im Flüssigkeitsrohr wird durch das in die Flüssigkeitsleitung eingebaute Ausgleichsrohr kontinuierlich Luft angesaugt und mit der Beizmittelflüssigkeit vermischt.

Nach einem weiteren Merkmal der Erfindung ist der Abstand der Prallscheibe vom Ausgang der Flüssigkeitsrohrleitung veränderbar.

Vorzugsweise ist an der vom Ausgang der Flüssigkeitsrohrleitung abgewandten Seite der Prallscheibe ein Zylinderkörper angebracht.

Die in einem bestimmten und verstellbaren Abstand von dem Flüssigkeitsrohrausgang angebrachte, vorzugsweise mit einem Zylinderkörper versehene Prallscheibe erfüllt folgende Aufgaben :

Sie bewirkt die optimale Vermischung der mit hoher Geschwindigkeit austretenden Beizflüssigkeit mit Sekundärluft sowie auch mit der ebenfalls austretenden Preßluft zu einem Nebel innerhalb der Mischtrommel. Der Scheibendurchmesser der Prallscheibe sowie gegebenenfalls der Zylinderkörper bestimmen hiebei die Streuung des erzeugten Sprühnebels.

Die pro kg Saatgut aufzubringenden verschiedenen Beizmittelmengen erfordern die Änderung der zur Vernebelung notwendigen Preßluft- und Sekundärluftmengen durch Luftdruckregelung. Bei Erhöhung des Preßluftdruckes muß gleichzeitig der Abstand der Prallscheibe vom Flüssigkeitsrohrende verändert werden, damit im Flüssigkeitsrohr ein Unterdruck aufgebaut wird, der das Ansaugen von Sekundärluft bewirkt.

Durch die Veränderung des Abstandes der Prallscheibe vom Ausgang der Flüssigkeitsrohrleitung kann also sowohl der Unterdruck in der Flüssigkeitsrohrleitung als auch der Zerstäubungswinkel des Sprühnebels reguliert werden.

Durch Prallscheiben mit verschiedenen Durchmessern und/oder Formen sowie durch an den Prallscheiben angebrachten Körpern kann die Sprühnebelform von kugelig bis kegelig verändert werden.

Nach einem weiteren Merkmal der Erfindung ist die Druckluftleitung unmittelbar vor ihrem Austrittsende als Expansionszylinder ausgebildet. Der Expansionszylinder dient der gleichmäßigen Druckverteilung am Ausgang der Druckluftleitung.

Die Prallscheibe kann z. B. in einem verstellbaren Bügel oder mit einem in der Flüssigkeitsrohrleitung geführten Stift im Abstand vom Ausgang der Rohrleitung gehalten sein.

Im folgenden wird eine Ausführungsform der Erfindung an Hand der Zeichnung näher erläutert.

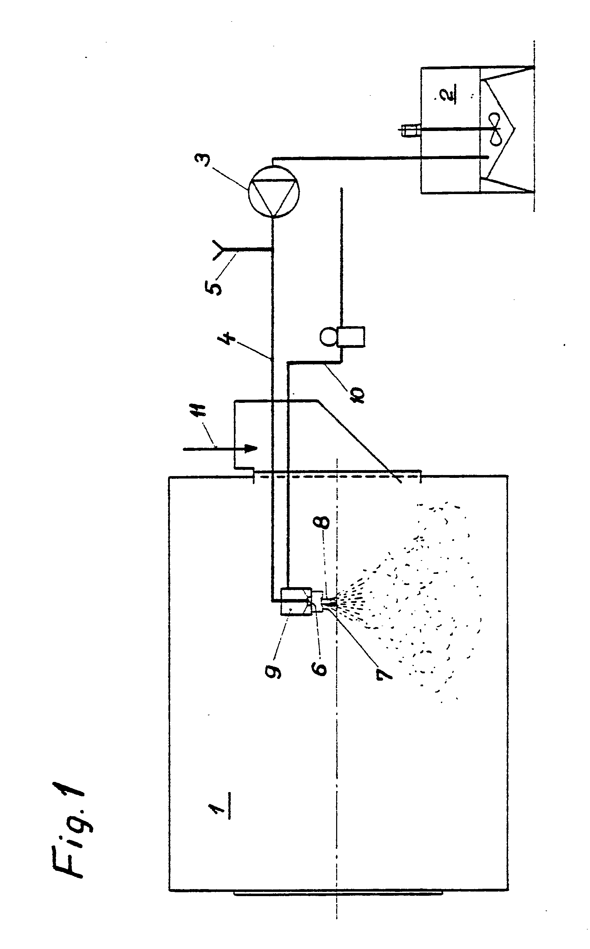

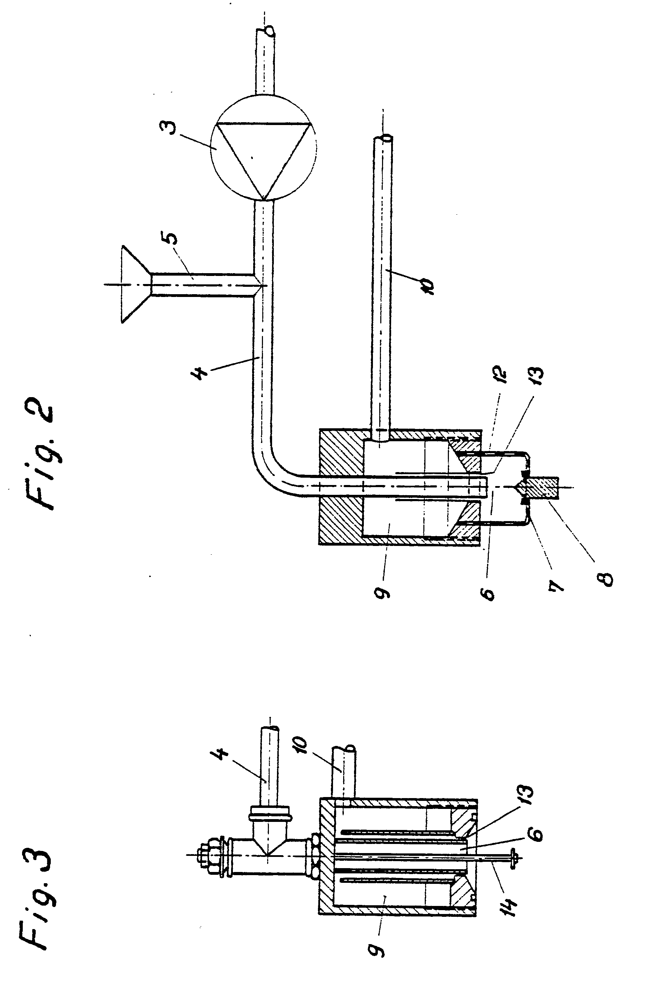

Fig. 1 zeigt eine schematische Darstellung einer erfindungsgemäßen Vorrichtung, Fig. 2 die eigentliche Einrichtung zum Aufbringen eines Beizmittels in vergrößerter Darstellung und Fig. 3 eine Ausführungsvariante.

Wie aus Fig. 1 ersichtlich, wird mittels einer Dosierpumpe 3, z. B. einer Membranpumpe, aus einem Mischer 2 Beizmittel entnommen und über die Flüssigkeitsrohrleitung 4 in der Mischtrommel 1 versprüht. Der zu behandelnde Samen gelangt über den Einlauf 11 in die Mischtrommel 1. Mit der Flüssigkeitsrohrleitung 4 steht ein Ausgleichsrohr 5 in Verbindung, durch das Sekundärluft angesaugt werden kann und außerdem den Zweck hat, von der Dosierpumpe herrührende Druckunterschiede in der Flüssigkeitsrohrleitung auszugleichen. Für die Zufuhr von Druckluft ist eine Druckluftleitung 10 vorgesehen, deren Ausgang den Ausgang 6 der Flüssigkeitsrohrleitung 4 konzentrisch umgibt, so daß ein Ringspalt 13 für den Austritt der Druckluft gebildet ist. Unmittelbar vor ihrem Ausgang ist die Druckluftleitung 10 als Expansionszylinder 9 ausgebildet (siehe Fig. 2 und 3). Gegenüber dem Ausgang 6 der Flüssigkeitsrohrleitung 4 und im Abstand von diesem ist eine Prallscheibe 7 mit einem Zylinderkörper 8 angeordnet. Die Prallscheibe 7 ist in einem verstellbaren Bügel 12 oder einem Stift 14 gehalten. Der Zylinderkörper 8 hat die Aufgabe, die Form des Sprühbildes zu bestimmen. Die sich ablösenden Randwirbeln werden von der Prallscheibe 7 auf den Zylinderkörper 8 weitergeleitet, so daß ein längliches Sprühbild entsteht. Die Länge des Zylinderkörpers 8 bestimmt daher die Länge des Sprühbildes. Die Breite des Sprühbildes wird durch den Durchmesser der Prallscheibe 7 festgelegt.

## Patentansprüche

1. Vorrichtung zur gleichmäßigen Dosierung, Verteilung und Aufbringung von flüssig formulierten Schutzstoffen, insbesondere Beizmitteln, auf Samen, mit einer Mischtrommel mit Sameneinlauf und Zuleitung für die Schutzstoffe, dadurch gekennzeichnet, daß eine von einer Dosierpumpe (3) kommende und in die Mischtrommel (1) mündende als Zuleitung für die Schutzstoffe dienende Flüssigkeitsrohrleitung (4) mit einem Ausgleichsgefäß oder -rohr (5) zur Sekundärluftansaugung in Verbindung steht, daß eine in die Mischtrommel (1) mündende Druckluftleitung (10) vorgesehen ist, in deren Ausgang konzentrisch der Ausgang der Flüssigkeitsrohrleitung (4) liegt und daß gegenüber dem Ausgang der Flüssigkeitsrohrleitung (4) eine Prallscheibe (7) angeordnet ist.

2. Vorrichtung nach Anspruch 1, dadurch gekennzeichnet, daß der Abstand der Prallscheibe (7) vom Ausgang (6) der Flüssigkeitsrohrleitung (4) veränderbar ist.

3. Vorrichtung nach Anspruch 1 oder 2, dadurch gekennzeichnet, daß an der vom Ausgang (6) der Flüssigkeitsrohrleitung (4) abgewandten Seite der Prallscheibe (7) ein Zylinderkörper (8) angebracht ist, um die Form des Sprühbildes zu bestimmen.

4. Vorrichtung nach den Ansprüchen 1 bis 3, dadurch gekennzeichnet, daß die Druckluftleitung (10) unmittelbar vor ihrem Austrittsende als Expansionszylinder (9) ausgebildet ist.

## Claims

1. Device for uniform dosing, distribution and application of fluid-formulated protective substances, in particular mordants, on seeds, with a mixing drum having a seed inlet and a feed inlet for the protective substances, characterised in that a liquid pipe duct (4) coming from a metering pump (3), opening into the mixing drum (1) and acting as a feed duct for the protective substances is in communication with a balance container or pipe (5) for suction intake of secondary air, that a compressed air pipe (10) leading into the mixing drum (1) is provided, in the outlet of which is concentrically positioned the liquid pipe duct, and that a rebound plate (7) is situated opposite to the outlet of the liquid pipe duct (4).

2. Device according to claim 1, characterised in that the spacing between the rebound plate (7) and the outlet (6) of the liquid pipe duct (4) is variable.

3. Device according to claim 1 or 2, characterised in that a cylindrical element (8) is installed on the side of the rebound plate (7) facing away from the outlet (6) of the liquid pipe duct (4) to determine the shape of the spray pattern.

4. Device according to claims 1 to 3, characterised in that the compressed air pipe (10) is constructed as an expansion cylinder (9) immediately before its outlet extremity.

## Revendications

1. Dispositif pour le dosage, la répartition et l'application réguliers, sur des graines, de produits de protection sous forme liquide, en particulier de produits désinfectants, comprenant un tambour de mélange avec une entrée pour les graines et une arrivée pour le produit de protection, caractérisé en ce que : un conduit tubulaire (4) pour liquide, servant de conduit d'amenée des produits de protection, venant d'une pompe doseuse (3) et débouchant dans le tambour de mélange (1), se trouve relié à un récipient ou un tube de détente (5) permettant une aspiration d'air secondaire, il est prévu un conduit d'air comprimé (10) débouchant dans le tambour de mélange, dans la sortie duquel est disposée de manière concentrique la sortie du conduit tubulaire (4) pour liquide, et, un disque déflecteur est disposé en face du conduit tubulaire pour liquide (4).

2. Dispositif selon la revendication 1, caractérisé en ce que la distance du disque déflecteur (7) par rapport à la sortie (6) du conduit tubulaire (4) pour liquide est réglable.

3. Dispositif selon la revendication 1 ou 2, caractérisé en ce que, sur le côté du disque déflecteur opposé à la sortie (6) du conduit tubulaire (4) pour liquide, est adapté un corps cylindrique (8), pour déterminer la forme de l'image de pulvérisation.

4. Dispositif selon l'une des revendications 1 à 3, caractérisé en ce que le conduit d'air comprimé (10) se présente, immédiatement avant son extrémité de sortie, sous la forme d'un cylindre d'expansion (9).

# Fig.1

Fig. 3

Fig. 2

0 157 857